(19) **Europäisches Patentamt European Patent Office Office européen des brevets**

(11) **EP 4 341 106 B1**

(12) **FASCICULE DE BREVET EUROPEEN**

(45) Date de publication et mention de la délivrance du brevet:
**02.07.2025 Bulletin 2025/27**

(21) Numéro de dépôt: **22729616.7**

(22) Date de dépôt: **18.05.2022**

(51) Classification Internationale des Brevets (IPC):
**B60C 23/04** *(2006.01)*   **B64C 25/00** *(2006.01)*
**G01B 21/26** *(2006.01)*   **B64D 45/00** *(2006.01)*

(52) Classification Coopérative des Brevets (CPC):
**B60C 23/0488; B64C 25/001;** B64D 2045/008;
B64D 2045/0085; G01B 21/26

(86) Numéro de dépôt international:
**PCT/EP2022/063488**

(87) Numéro de publication internationale:
**WO 2022/243392 (24.11.2022 Gazette 2022/47)**

(54) **PROCEDE DE SURVEILLANCE D'UN ATTERRISSEUR D'AERONEF FAISANT USAGE D'AU MOINS UN ACCELEROMETRE PORTE PAR UNE ROUE DE L'ATTERRISSEUR, ET AERONEF METTANT EN OEUVRE CE PROCEDE**

VERFAHREN ZUR ÜBERWACHUNG EINES FLUGZEUGFAHRWERKS MIT MINDESTENS EINEM BESCHLEUNIGUNGSMESSER AUF DEM FAHRWERKRAD UND FLUGZEUG MIT DIESEM VERFAHREN

METHOD FOR MONITORING AN AIRCRAFT LANDING GEAR EMPLOYING AT LEAST ONE ACCELEROMETER SUPPORTED BY A WHEEL OF THE LANDING GEAR, AND AIRCRAFT IMPLEMENTING THIS METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.05.2021 FR 2105233**

(43) Date de publication de la demande:
**27.03.2024 Bulletin 2024/13**

(73) Titulaires:
• **Safran Landing Systems
78140 Vélizy-Villacoublay (FR)**
• **Safran Electronics & Defense
75015 Paris (FR)**

(72) Inventeurs:
• **ZABULON, Joël
77550 MOISSY-CRAMAYEL (FR)**
• **LEKARSKI, Kyril
77550 MOISSY-CRAMAYEL (FR)**
• **FANTON, Nicolas
77550 MOISSY-CRAMAYEL (FR)**
• **MICHAUD, Benjamin
77550 MOISSY-CRAMAYEL (FR)**
• **BRUNSTEIN, Etienne
77550 MOISSY-CRAMAYEL (FR)**

(74) Mandataire: **Cabinet Boettcher
5, rue de Vienne
75008 Paris (FR)**

(56) Documents cités:
EP-A1- 3 118 030    EP-A1- 3 336 485
WO-A1-2012/140370    US-B1- 8 543 322

EP 4 341 106 B1

**EP 4 341 106 B1**

**Description**

L'invention concerne le domaine de l'aéronautique et plus particulièrement la surveillance d'un atterrisseur d'aéronef.

ARRIERE PLAN DE L'INVENTION

Les atterrisseurs d'un aéronef font l'objet d'une surveillance constante. Les atterrisseurs sont rarement équipés d'un détecteur d'atterrissage dur, permettant de signaler un atterrissage particulièrement brutal, ayant pu potentiellement conduire à la déformation de certaines pièces de l'atterrisseur, notamment du ou des essieux portant les roues de l'atterrisseur. Ce détecteur constitue un équipement additionnel embarqué, source de masse et de maintenance supplémentaires. On connaît des exemples de détecteurs décrits dans les documents EP3118030 A1, EP3336485 A1 et US8543322 B1.

Par ailleurs, il existe un besoin non assouvi de surveiller en temps réel les déflexions des essieux des atterrisseurs, pour vérifier si celles-ci sont conformes aux valeurs attendues en service ou si au contraire elles atteignent des valeurs laissant suspecter une déformation plastique d'une portion de l'atterrisseur. Ces déflexions plastiques ne sont en pratique détectables que lors d'une opération de maintenance lourde lors de laquelle l'atterrisseur est démonté de l'aéronef et rapatrié en atelier de maintenance.

OBJET DE L'INVENTION

L'invention vise à proposer un moyen de surveillance en temps réel d'un atterrisseur d'aéronef ne nécessitant pas d'équiper l'atterrisseur de dispositifs ad hoc ni de déposer l'atterrisseur.

PRESENTATION DE L'INVENTION

En vue de la réalisation de ce but, on propose un procédé de surveillance d'un atterrisseur d'aéronef, comportant l'étape d'utiliser des informations issues d'au moins un accéléromètre solidaire d'une roue de l'atterrisseur montée à rotation sur un essieu de l'atterrisseur, pour estimer un angle de déflexion de l'essieu au moins lorsque la roue est en contact avec le sol.

Ainsi, on profite de la présence d'un accéléromètre sur les roues de l'atterrisseur pour en exploiter le signal afin de générer des informations qui ne sont pas directement liées à la roue, mais utiles à la surveillance de l'atterrisseur lui-même et de ses déformations en service.

En particulier, les roues des atterrisseurs sont équipées de dispositifs de surveillance de la pression des pneumatiques (en anglais TPMS pour Tyre Pressure Monitoring System). Les derniers dispositifs de ce type en développement sont autonomes en énergie, transmettent leurs informations à distance, et sont équipés d'au moins un accéléromètre trois axes. Certains sont même équipés de deux accéléromètres, dont l'un pour identifier la phase de vol (notamment en détectant l'accélération causée par l'impact des roues sur le sol à l'atterrissage), et l'autre pour identifier la position angulaire du dispositif lorsque l'aéronef est à l'arrêt.

Ainsi, et selon un mode avantageux de mise en œuvre de l'invention, on utilise les signaux du ou des accéléromètres intégrés dans un dispositif de surveillance de la pression du pneumatique solidaire de la roue. Ainsi, on profite de la présence des accéléromètres dans le dispositif de surveillance de la pression des pneumatiques pour en exploiter les signaux. Les signaux de ces accéléromètres sont disponibles à tout moment, et peuvent donc être exploités pour générer les informations recherchées à propos de l'atterrisseur.

L'invention concerne également un aéronef équipé pour la mise en œuvre de ce procédé.

DESCRIPTION DES FIGURES

L'invention sera mieux comprise à la lumière de la description qui suit d'un mode particulier de réalisation de l'invention, en référence aux figures des dessins annexés, parmi lesquelles :

[Fig. 1] la figure 1 est une vue schématique d'un atterrisseur d'aéronef, les roues étant illustrées en pointillés pour faire apparaître l'essieu qui les porte;

[Fig. 2] la figure 2 est une vue en perspective d'une demi-jante d'une des roues de l'atterrisseur de la figure 1, équipée d'un dispositif de surveillance de la pression des pneumatiques;

[Fig. 3] la figure 3 est un schéma illustrant les divers repères utilisés pour l'exploitation des signaux des accéléromètres, la roue étant vue ici de côté;

[Fig. 4] la figure 4 est une vue schématique partielle de l'atterrisseur de la figure 1 vu de face, illustrant de façon exagérée la déflexion de l'essieu que l'on cherche à estimer par le procédé de l'invention.

## DESCRIPTION DETAILLEE DE L'INVENTION

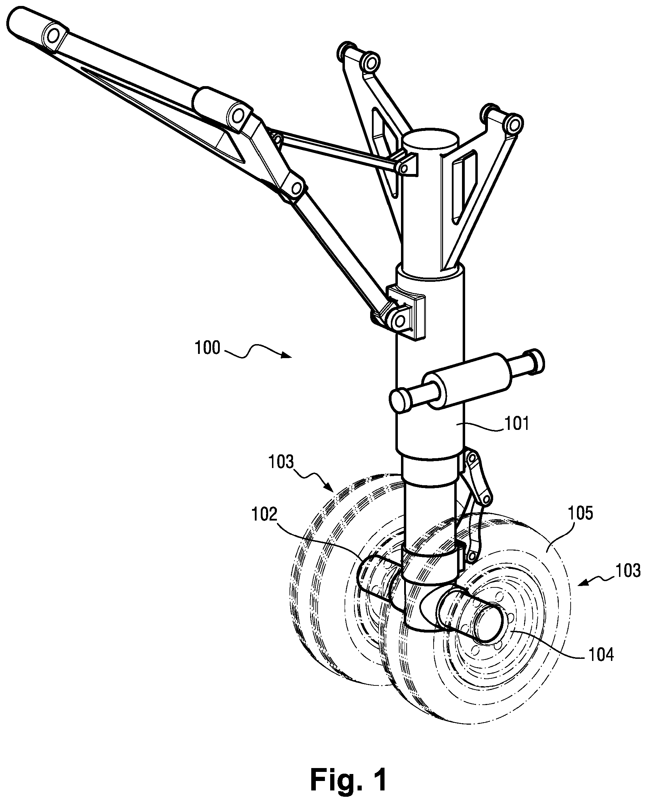

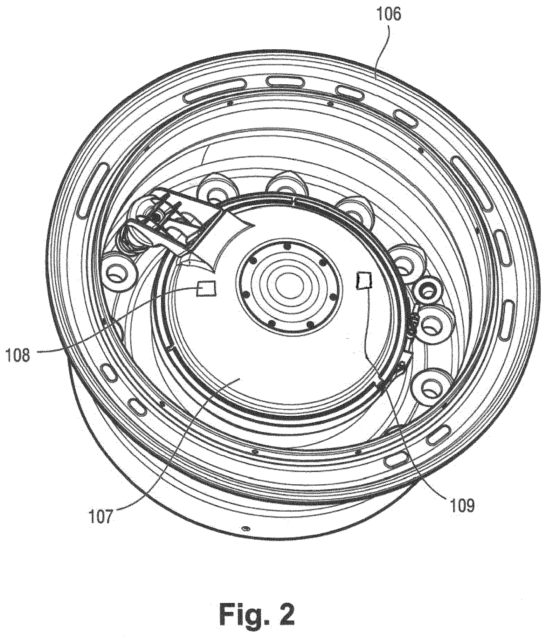

L'invention concerne la surveillance d'un atterrisseur 100 d'aéronef tel qu'illustré à la figure 1. L'atterrisseur 100 comporte une jambe 101 solidaire de la structure de l'aéronef, portant un essieu 102 sur lequel des roues 103 sont montées à rotation. Chaque roue 103 comporte une jante 104 portant un pneumatique 105. De façon connue en soi, chaque jante comporte deux demi-jantes boulonnées entre elles. Sur la figure 2 est illustré une demi-jante extérieure 106 équipée d'un dispositif de surveillance de la pression du pneumatique 107. Ledit dispositif intègre au moins un accéléromètre 108, ici un accéléromètre triaxial, dont on exploite les signaux selon l'invention. Pour la description de l'exploitation des signaux de l'accéléromètre, les repères directs suivants sont utilisés :

|  | Repère G lié au sol | Repère A lié à l'essieu | Repère M lié à la roue | Repère C lié à l'accéléromètre |
|---|---|---|---|---|
| Premier axe | Xg | Xa | Xm | Xc |
| Deuxième axe | Yg | Ya | Ym | Yc |
| Troisième axe | Zg | Za | Zm | Zc |

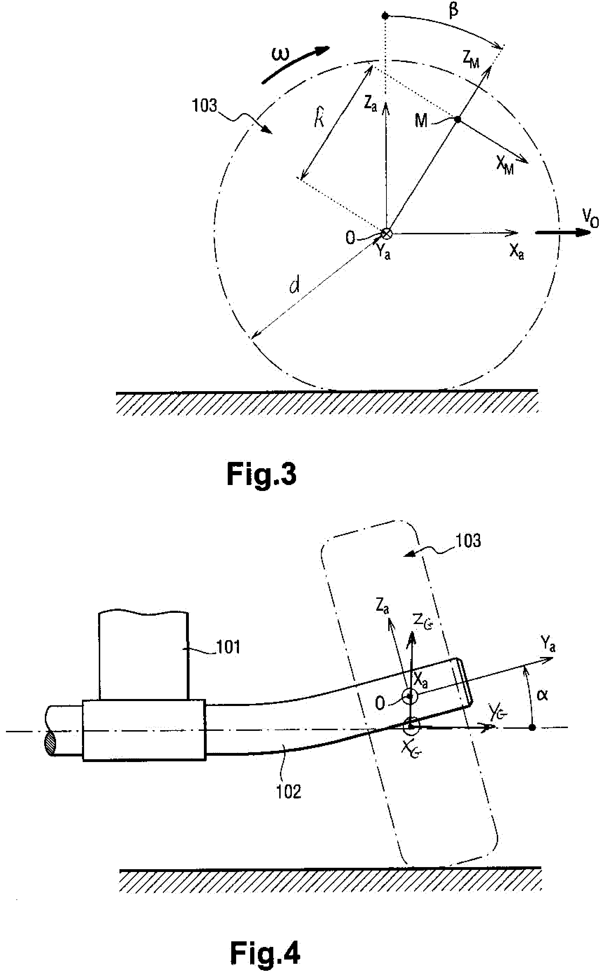

Les repères, qui sont illustrés aux figures 3 et 4, sont construits comme suit :

- Repère G : repère orthonormé direct lié à la roue considéré non inclinée et montée sur un essieu parfait, non fléchi, ayant comme origine le point O, dans lequel l'axe $Z_g$ est vertical, l'axe $X_g$ est horizontal et suivant la direction de roulage vers l'avant, et l'axe $Y_g$ est horizontal et complète le trièdre orthonormé direct ;
- Repère A : repère orthonormé direct lié à l'essieu, et dont l'origine est sur l'axe géométrique de celui-ci en un point O, sensiblement au centre de la roue 103. Comme cela est plus particulièrement visible à la figure 4, on passe du repère G au repère A par une rotation d'angle $\alpha$ autour de l'axe $X_g$ qui est l'angle de déflexion de l'essieu à estimer. L'axe $Y_a$ s'étend suivant l'axe de rotation de la roue. L'origine de ce repère se déplace suivant l'axe $X_g$ avec une vitesse $V_0$. La matrice de passage du repère G au repère A est la matrice :

$$Rot_{G \to A} = \begin{bmatrix} 1 & 0 & 0 \\ 0 & \cos\alpha & \sin\alpha \\ 0 & -\sin\alpha & \cos\alpha \end{bmatrix}$$

- Repère M : repère orthonormé direct lié à la roue, et dont l'origine est un point M situé à une distance $R$ de l'axe $Y_a$. Le point M correspond sensiblement au centre de l'accéléromètre 108 porté par le dispositif de surveillance de la pression 107. Le repère M se déduit du repère A par une rotation autour de l'axe $Y_a$ d'un angle $\beta$, qui est l'angle de rotation de la roue lors du déplacement de l'aéronef. La vitesse de rotation de la roue est donc $\omega = \dot{\beta}$. L'axe $Y_m$ a la même direction que l'axe $Y_a$. L'axe $Z_m$ s'étend selon une direction radiale, tandis que l'axe $X_m$ s'étend selon une direction orthoradiale. La matrice de passage du repère A au repère M est la matrice :

$$Rot_{A \to M} = \begin{bmatrix} \cos\beta & 0 & -sin\beta \\ 0 & 1 & 0 \\ sin\beta & 0 & cos\beta \end{bmatrix}$$

- Repère C : repère direct (non nécessairement orthonormé) lié à l'accéléromètre 108 porté par le dispositif de surveillance de la pression 107. Les trois axes du repère C correspondent aux trois axes d'entrée des trois accéléromètres élémentaires formant l'accéléromètre 108. On notera que, en théorie, les repères C et M sont confondus. En pratique, les défauts de montage font qu'ils sont légèrement décalés l'un par rapport à l'autre. On passe du repère M au repère C par 6 petites rotations définissant les erreurs d'alignement (ou désalignements) $\theta_{xy}$, $\theta_{xz}$, $\theta_{yx}$, $\theta_{yz}$, $\theta_{zx}$, $\theta_{zy}$ des accéléromètres, qui définissent la matrice de passage permettant d'obtenir les accélérations ressenties par l'accéléromètre 108 dans le repère C à partir des mesures effectuées dans le repère M :

$$Proj_{M \to C} = \begin{bmatrix} 1 & \theta_{xy} & \theta_{xz} \\ \theta_{yx} & 1 & \theta_{yz} \\ \theta_{zx} & \theta_{zy} & 1 \end{bmatrix}$$

Tous calculs faits, et en ne retenant que les termes du premier ordre, les accélérations $\gamma_{x,c}$ (sensiblement ortho-radiale), $\gamma_{y,c}$ (selon une direction sensiblement parallèle à un axe central de l'essieu), et $\gamma_{z,c}$ (sensiblement radiale) mesurées par les accéléromètres élémentaires de l'accéléromètre triaxial 108 selon les trois axes du repère C valent :

$$\begin{bmatrix} \gamma_{x,c} \\ \gamma_{y,c} \\ \gamma_{z,c} \end{bmatrix} \approx \begin{bmatrix} -g.\sin\beta + g.\theta_{xz}.\cos\beta + (\tau + \cos\beta).\dot{V}o - \theta_{xz}.R\omega^2 + b_x \\ g.\sin\alpha - g.[\theta_{yx}.\sin\beta - \theta_{yz}.\cos\beta] - \theta_{yz}.R\omega^2 + b_y \\ g.\cos\beta - g.\theta_{zx}.\sin\beta + \sin\beta.\dot{V}o - R\omega^2 + b_z \end{bmatrix}$$

Dans cette expression, $g$ est l'accélération de la pesanteur terrestre, $\tau$ est le rapport entre la distance R et le rayon de roulement $d$ de la roue, et les quantités $b_x$, $b_y$, $b_z$ sont des décalages (couramment appelés biais) affectant les mesures d'accélération sur chacun des axes de l'accéléromètre 108. Il apparaît que l'accélération transversale $\gamma_{y,c}$ comporte différents termes, dont :

    1- un terme en $g.\sin\alpha$, sensiblement constant lors d'une phase de roulage au sol, et qui dépend donc directement de l'angle de déflexion $\alpha$ de l'essieu 102 ;
    2- le terme de décalage $b_y$, sensiblement constant ;
    3- des termes variables périodiques avec la rotation de la roue en $\sin\beta$, $\cos\beta$ ;
    4- enfin un terme variable avec la vitesse de rotation de la roue en $\omega^2$.

En exploitant selon l'invention l'accélération transversale $\gamma_{y,c}$, il est donc possible d'estimer l'angle de déflexion $\alpha$ de l'essieu 102.

Selon un premier type particulier de mise en œuvre du procédé de l'invention, on estime l'angle $\beta$ de rotation de la roue 103 à partir de l'accélération orthoradiale $\gamma_{x,c}$ et/ou de l'accélération radiale $\gamma_{z,c}$, et à partir de cette estimation, on estime la vitesse de rotation $\omega = \dot{\beta}$. Ces deux estimations permettent d'estimer les termes variables 3/ et 4/ pour les éliminer de l'accélération transversale $\gamma_{y,c}$, afin de n'en garder que la quantité en $b_y + g.\sin\alpha$, qui sera traitée pour en extraire l'angle de déflexion $\alpha$.

Un deuxième type particulier de mise en œuvre de l'invention comprend le filtrage des termes variables périodiques avec l'angle $\beta$ de rotation de la roue 103 à l'aide d'un filtre passe-bas dont la fréquence de coupure est inférieure à la fréquence de rotation de la roue (égale à $\omega/2\pi$). On obtient ainsi les accélérations filtrées :

$$\begin{bmatrix} \gamma_{x,c,f} \\ \gamma_{y,c,f} \\ \gamma_{z,c,f} \end{bmatrix} \approx \begin{bmatrix} \tau.\dot{V}o - \theta_{xz}.R\omega^2 + b_x \\ g.\sin\alpha - \theta_{yz}.R\omega^2 + b_y \\ -R\omega^2 + b_z \end{bmatrix}$$

A vitesse suffisamment élevée, le terme de décalage $b_z$ est négligeable, de sorte que l'accélération filtrée $\gamma_{z,c,f}$ constitue un bon estimateur du terme $-R\omega^2$. Remplaçant dans l'expression de $\gamma_{y,c,f}$, on obtient :

$$\gamma_{y,c,f} - \theta_{yz}\gamma_{z,c,f} \approx g.\sin\alpha + b_y$$

Ainsi, il est encore une fois possible d'estimer la même quantité $b_y + g.\sin\alpha$, et donc de surveiller l'angle de déflexion $\alpha$ de l'essieu. Cette dernière relation peut encore se modéliser sous la forme :

$$y = h.X + v$$

Où $v$ est un bruit de mesure, avec :

$$y = \gamma_{y,c,f} \qquad h = \begin{bmatrix} 1 & \gamma_{z,c,f} \end{bmatrix} \qquad X = \begin{bmatrix} g.\sin\alpha + b_y \\ \theta_{yz} \end{bmatrix}$$

On peut alors estimer les deux composantes du vecteur d'état $X$ en accumulant les mesures $y$ et $h$ sur la période durant laquelle le filtrage est efficace, précisément après le transitoire initial au moment de l'impact de la roue 103 sur le sol et avant que la vitesse de rotation de la roue ne soit trop lente (c'est-à-dire lorsque la fréquence de roue est inférieure à la fréquence de coupure du filtre), puis en estimant le vecteur d'état $X$ par toute méthode appropriée, comme par exemple une méthode de pseudo-inverse.

Un premier algorithme permettant l'implémentation de ce deuxième type particulier de mise en œuvre du procédé de l'invention est maintenant décrit. Il comporte les cinq étapes suivantes :

A- On commence les mesures d'accélération $\gamma_{y,c}$ et $\gamma_{z,c}$ à fréquence fixe (100 Hz par exemple) puis on les filtre au moyen d'un filtre passe-bas de fréquence de coupure de quelques Hz. Le début du prélèvement a lieu en début d'atterrissage, détectable lorsque $|\gamma_{z,c}|$ dépasse un certain seuil ou est en saturation. Le filtrage peut démarrer sur des valeurs saturées, permettant de passer la période transitoire plus rapidement et établir le filtrage plus rapidement ;

B- Une fois la phase de saturation dépassée, on prélève les données suivantes, à la même fréquence ou à une fréquence plus faible :

$$y_i = \gamma_{y,c,f}(t_i) \qquad h(t_i) = \begin{bmatrix} 1 & \gamma_{z,c,f}(t_i) \end{bmatrix}.$$

où les $t_i$ sont les instants d'échantillonnage ;

C- On arrête le prélèvement lorsque la vitesse de la roue est inférieure à un seuil donné, qui peut être détecté avec un seuil sur $|\gamma_{z,c,f}|$.

D- En mettant les données prélevées sous la forme matricielle suivante :

$$Y = \begin{bmatrix} y_1 \\ \dots \\ y_n \end{bmatrix} \qquad H = \begin{bmatrix} h_1 \\ \dots \\ h_n \end{bmatrix}$$

on obtient l'estimée du vecteur d'état $X$ en calculant $\hat{X} = M.Y$ avec la pseudo-inverse $M = (H^t.H)^{-1}.H^t$

E-Finalement, l'estimée de l'angle de déflexion $\alpha$ s'obtient par $\hat{\alpha} = \arcsin(\hat{X}(1)/g)$ (en négligeant le décalage $b_y$), et l'estimée du désalignement $\theta_{yz}$ s'obtient par $\hat{\theta}_{yz} = \hat{X}(2)$.

Ce premier algorithme peut être activé dès que les roues de l'atterrisseur touchent le sol. Il est possible de détecter cet instant $t_0$ en surveillant la pression des pneumatiques en détectant une augmentation brusque de la pression du pneumatique équipant la jante concernée, et ainsi déclencher l'acquisition des mesures. Le début du traitement peut être retardé en cas de saturation des mesures. En particulier, l'accélération $\gamma_{z,c}$ intègre l'accélération centripète, pouvant atteindre quelques dizaines de g en début de rotation. Dans ce cas, le filtrage passe-bas peut néanmoins être activé, permettant d'atteindre plus rapidement le régime permanent (élimination du transitoire). Après un délai prédéfini, les mesures sont prélevées pour élaborer les quantités $Y$ et $H$. La fin du prélèvement intervient soit après un temps prédéfini, soit lorsque l'accélération $\gamma_{z,c,f}$ passe sous un seuil prédéterminé. En dessous de ce seuil, le filtrage passe-bas n'est plus efficace pour éliminer les termes variables sinusoïdaux. Le calcul de $\hat{\alpha}$ peut ensuite être réalisé.

Les calculs peuvent être réalisés en temps réel dans l'un des calculateurs de l'aéronef (par exemple des moyens de calculs embarqués sur la roue ou l'atterrisseur), soit de façon déportée par transmission des données à un dispositif de collecte de ces données, à chaque vol ou lors d'une visite de l'aéronef à un centre de maintenance.

Le calcul de la pseudo-inverse peut être remplacé par une méthode récursive des moindres carrés. Cela peut permettre de lisser la charge de calcul au fil des acquisitions. Lorsqu'un grand nombre de points est utilisé par exemple pour l'estimée du vecteur d'état par moindres carrés, l'étape A/ préalable de filtrage passe-bas peut être supprimée, l'estimée par moindres carrés remplissant alors le rôle de filtrage.

Un deuxième algorithme simplifié est maintenant proposé. En effet l'algorithme précédent est sensible au désalignement $\theta_{yz}$. Si le désalignement $\theta_{yz}$ est connu au moins approximativement avant le vol (obtenu avec le premier algorithme par exemple, et en supposant qu'il reste suffisamment constant dans le temps, ce qui est en général le cas), et en se plaçant dans l'hypothèse où, à vitesse suffisamment basse, le terme $-\theta_{yz}.R\omega^2$ est petit devant $g.\sin\alpha$, on corrige l'accélération transversale filtrée $\gamma_{y,c,f}$ de la manière suivante :

$$\gamma_{y,c,cor} \approx \gamma_{y,c,f} - \theta_{yz}\gamma_{z,c,f}$$

L'estimée de l'angle de déflexion $\alpha$ s'obtient alors directement par :

$$\hat{\alpha} = \arcsin\left(\gamma_{y,c,cor}/g\right).$$

Une variante de mise en œuvre du procédé de l'invention s'applique à une roue dont le dispositif de surveillance de la pression 107 comporte un deuxième accéléromètre 109, également triaxial, disposé de façon diamétralement opposée relativement au premier accéléromètre 108. En appelant $\gamma_{x,c,1}$, $\gamma_{y,c,1}$, $\gamma_{z,c,1}$ les accélérations mesurées par le premier accéléromètre 108, et $\gamma_{x,c,2}$, $\gamma_{y,c,2}$, $\gamma_{z,c,2}$ les accélérations mesurées par le deuxième accéléromètre 109, les accélérations radiales $y_{z,c,1}$ et $\gamma_{z,c,2}$ valent respectivement :

$$\begin{cases} \gamma_{z,c,1} = g.cos\beta - g.\theta_{zx,1}.sin\beta + sin\beta.\dot{V}o - R\omega^2 + b_{z,1} \\ \gamma_{z,c,2} = -g.cos\beta + g.\theta_{zx,2}.sin\beta - sin\beta.\dot{V}o - R\omega^2 + b_{z,2} \end{cases}$$

De sorte que la moyenne de ces deux accélérations vaut :

$$\bar{\gamma}_{z,c} = \frac{\gamma_{z,c,1} + \gamma_{z,c,2}}{2} = g\left(\frac{\theta_{zx,2} - \theta_{zx,1}}{2}\right).sin\beta - R\omega^2 + \frac{b_{z,1} + b_{z,2}}{2}$$

Dans cette moyenne, le terme variable en *g.cosβ* a disparu. Il subsiste un terme variable sinusoïdal, mais de faible amplitude, beaucoup plus facile à filtrer. On utilise alors cette accélération moyennée pour mettre en œuvre le procédé de l'invention.

Grâce au procédé de l'invention, il est donc possible d'estimer l'angle de déflexion de l'essieu à l'aide des seuls signaux d'un ou plusieurs accéléromètres portés par la roue associée. Cette estimation peut être exploitée pour surveiller les déformations de l'essieu sous différentes formes comme par exemple :

- surveillance pendant l'exploitation de l'aéronef de la déflexion de l'essieu en vérifiant à chaque atterrissage que la déflexion de l'essieu reste dans des valeurs compatibles avec des déformations élastiques usuelles ;
- relevé des déflexions ainsi estimées pour établir une courbe de tendance et détecter une éventuelle dérive de cette déflexion avec le temps ;
- détection d'une déflexion importante suite à un atterrissage, pouvant potentiellement indiquer une déformation plastique de l'essieu, cette détection étant le résultat du dépassement d'un seuil prédéterminé par l'une des accélérations mesurées par le ou les accéléromètres.

L'invention n'est pas limitée à ce qui vient d'être décrit, mais englobe au contraire toute variante entrant dans le cadre défini par les revendications.

En particulier, bien que l'on utilise ici les signaux des accéléromètres triaxiaux intégrés dans le dispositif de surveillance de la pression du pneumatique, on pourra plus généralement utiliser un accéléromètre pas forcément triaxial, puisque l'on peut même estimer l'angle de déflexion à l'aide de la seule accélération transversale filtrée

$$\gamma_{y,c,f} \approx g.sin\alpha - \theta_{yz}.R\omega^2 + b_y$$

si l'on sait par ailleurs estimer la vitesse de rotation de la roue (par exemple à l'aide de l'information de vitesse fournie par un tachymètre) pour éliminer le terme en $R\omega^2$.

Le repère G peut être lié à la piste.

L'invention peut être appliquée à un aéronef embarquant une unité électronique de commande (comportant par exemple un processeur et une mémoire) qui est reliée aux accéléromètres et qui exécute un programme informatique comportant des instructions agencées pour mettre en œuvre le procédé. L'unité électronique de commande est par exemple celle du système de surveillance de l'aéronef ACMS (ACMS - Aircraft Condition Monitoring Systems). En variante, l'unité électronique de commande est logée dans la soute de l'atterrisseur et est interrogeable par une liaison radioélectrique ou filaire au moyen d'un terminal de maintenance.

## Revendications

1. Procédé de surveillance d'un atterrisseur (100) d'aéronef doté d'un dispositif de surveillance de la pression (107) d'un pneumatique (105), le pneumatique (105) étant porté par une roue (103) de l'atterrisseur, la roue (103) étant montée à rotation sur un essieu (102) de l'atterrisseur, le procédé comportant l'étape d'estimer un angle de déflexion $\alpha$ de

l'essieu au moins lorsque la roue est en contact avec le sol, **caractérisé en ce que** ladite estimation utilise des informations issues d'au moins un accéléromètre (108) intégré dans le dispositif de surveillance de la pression (107).

**2.** Procédé selon la revendication 1, dans lequel on utilise une accélération transversale $\gamma_{y,c}$ mesurée par l'accéléromètre (108) selon une direction sensiblement parallèle à un axe central de l'essieu (102) et dépendante de l'angle de déflexion $\alpha$ de l'essieu pour estimer celui-ci.

**3.** Procédé selon la revendication 2, dans lequel on estime un angle $\beta$ de rotation de la roue (103) à partir d'une accélération orthoradiale $\gamma_{x,c}$ et/ou d'une accélération radiale $\gamma_{z,c}$ mesurées par l'accéléromètre (108), et on estime alors une vitesse de rotation $\omega = \dot{\beta}$, ces deux estimations étant exploitées pour éliminer de l'accélération transversale $\gamma_{y,c}$ des termes variables avec l'angle de rotation et la vitesse de rotation, puis on estime l'angle de déflexion de l'essieu à partir de l'accélération transversale $\gamma_{y,c}$ ainsi retraitée.

**4.** Procédé selon la revendication 2, dans lequel on filtre l'accélération transversale $\gamma_{y,c}$ et une accélération radiale $\gamma_{z,c}$ mesurée par l'accéléromètre (108) pour obtenir une accélération transversale filtrée $\gamma_{y,c,f}$ et une accélération radiale filtrée $\gamma_{z,c,f}$ en éliminant les termes variant périodiquement en fonction d'un angle de rotation $\beta$ de la roue.

**5.** Procédé selon la revendication 4, dans lequel on commence le filtrage à compter d'un début d'atterrissage que l'on détecte quand la quantité $|\gamma_{z,c}|$ dépasse un certain seuil ou est en saturation.

**6.** Procédé selon la revendication 4, dans lequel, après établissement du filtrage :

- on prélève les données

$$y_i = \gamma_{y,c,f}(t_i) \, h(t_i) = \begin{bmatrix} 1 & \gamma_{y,c,f}(t_i) \end{bmatrix}.$$

où les $t_i$ sont les instants d'échantillonnage, $\gamma_{y,c,f}$ est l'accélération transversale filtrée, et $\gamma_{z,c,f}$ est l'accélération radiale filtrée;
- on met les données prélevées sous la forme matricielle suivante :

$$Y = \begin{bmatrix} y_1 \\ \dots \\ y_n \end{bmatrix} \qquad H = \begin{bmatrix} h_1 \\ \dots \\ h_n \end{bmatrix}$$

- on estime un vecteur d'état $X$ en calculant $\hat{X} = M.Y$ avec la pseudo-inverse $M = (H^t.H)^{-1}.H^t$ ;
- on estime l'angle de déflexion de l'essieu par le calcul $\hat{\alpha} = \arcsin(\hat{X}(1)/g)$ où $g$ est l'accélération de la pesanteur.

**7.** Procédé selon la revendication 6, dans lequel Le calcul de la pseudo-inverse est remplacé par une méthode récursive des moindres carrés.

**8.** Procédé selon la revendication 4, dans lequel on calcule une accélération corrigée ($\gamma_{y,c,cor}$) à partir des accélérations filtrées $\gamma_{y,c,f}$ et $\gamma_{z,c,f}$ :

$$\gamma_{y,c,cor} \approx \gamma_{y,c,f} - \theta_{yz}\gamma_{z,c,f}$$

Où $\theta_{yz}$ est donné ou estimé préalablement, et on estime l'angle de déflexion de l'essieu par le calcul

$$\hat{\alpha} = \arcsin\left(\gamma_{y,c,cor}/g\right)$$

où $g$ est l'accélération de la pesanteur.

**9.** Procédé selon la revendication 4, dans lequel on utilise deux accéléromètres (108, 109) disposés sur la roue (103) de façon diamétralement opposée et mesurant des accélérations radiales respectives $\gamma_{z,c,1}$ et $\gamma_{z,c,2}$, et dans lequel on forme l'accélération radiale moyenne $\bar{\gamma}_{z,c} = \frac{\gamma_{z,c,1}+\gamma_{z,c,2}}{2}$ que l'on utilise en tant qu'accélération radiale pour l'estimation de l'angle de déflexion de l'essieu.

10. Aéronef comportant au moins un atterrisseur pourvu d'une roue dont est solidaire au moins un accéléromètre relié à une unité électronique de commande d'un dispositif de surveillance de la pression (107) d'un pneumatique (105) exécutant un programme informatique comportant des instructions agencées pour mettre en œuvre le procédé selon l'une quelconque des revendications précédentes.

## Patentansprüche

1. Verfahren zur Überwachung eines Luftfahrzeug-Fahrwerks (100) mit einer Drucküberwachungsvorrichtung (107) zur Überwachung des Drucks eines Reifens (105), wobei der Reifen (105) von einem Rad (103) des Fahrwerks getragen wird, wobei das Rad (103) drehbar an einer Achse (102) des Fahrwerks angebracht ist, wobei das Verfahren den Schritt umfasst, dass ein Ablenkwinkel $\alpha$ der Achse zumindest dann geschätzt wird, wenn das Rad mit dem Boden in Kontakt steht, **dadurch gekennzeichnet, dass** bei besagter Schätzung Daten verwendet werden, die von zumindest einem in der Drucküberwachungsvorrichtung (107) eingebauten Beschleunigungsmesser (108) stammen.

2. Verfahren nach Anspruch 1, wobei zur Schätzung des Ablenkwinkels eine Querbeschleunigung $\gamma_{y,c}$ verwendet wird, welche von dem Beschleunigungsmesser (108) entlang einer im Wesentlichen parallel zu einer Mittelachse der Achse (102) verlaufenden Richtung gemessen wird, die von dem besagten Ablenkwinkel $\alpha$ der Achse abhängt.

3. Verfahren nach Anspruch 2, wobei ein Drehwinkel $\beta$ des Rads (103) basierend auf einer von dem Beschleunigungsmesser (108) gemessenen Orthoradialbeschleunigung $\gamma_{x,c}$ und/oder Radialbeschleunigung $\gamma_{z,c}$ geschätzt wird, und in der Folge eine Drehgeschwindigkeit $\omega = \dot{\beta}$, geschätzt wird, wobei diese beiden Schätzungen ausgewertet werden, um aus der Querbeschleunigung $\gamma_{z,c}$ mit dem Drehwinkel und der Drehgeschwindigkeit veränderliche Terme zu eliminieren, und anschließend aus der angepassten Querbeschleunigung $\gamma_{yc}$ der Ablenkwinkel der Achse geschätzt wird.

4. Verfahren nach Anspruch 2, wobei die Querbeschleunigung $\gamma_{yc}$ und eine von dem Beschleunigungsmesser (108) gemessene Radialbeschleunigung $\gamma_{zc}$ gefiltert werden, um eine gefilterte Querbeschleunigung $\gamma_{y,c,f}$ und eine gefilterte Radialbeschleunigung $\gamma_{z,c,f}$ zu erhalten, indem jene Terme, die sich in Abhängigkeit von einem Drehwinkel $\beta$ des Rads periodisch verändern, eliminiert werden.

5. Verfahren nach Anspruch 4, wobei die Filterung ab einem Beginn der Landung erfolgt, welcher erkannt wird, sobald die Menge $|\gamma_{zc}|$ einen bestimmten Schwellenwert überschreitet oder sich in Sättigung befindet.

6. Verfahren nach Anspruch 4, wobei nach durchgeführter Filterung:

   - folgende Daten erhoben werden,

$$y_i = \gamma_{y,c,f}(t_i)\, h(t_i) = [1 \quad \gamma_{y,c,f}(t_i)]\cdot y$$

   wobei $t_i$ die Abtastzeitpunkte sind, $\gamma_{y,c,f}$ die gefilterte Querbeschleunigung ist, und $\gamma_{z,c,f}$ die gefilterte Radialbeschleunigung ist;
   - die erhobenen Daten in die folgende Matrixform gebracht werden:

$$Y = \begin{bmatrix} y_1 \\ \cdots \\ y_n \end{bmatrix} \qquad H = \begin{bmatrix} h_1 \\ \cdots \\ h_n \end{bmatrix}$$

   - ein Zustandsvektor $X$ geschätzt wird, indem mit der Gleichung $\hat{X} = M.Y$ gerechnet wird, wobei für die Pseudoinverse $M = (H^t.H)^{-1}.H^t$ gilt;
   - der Ablenkwinkel der Achse mittels folgender Rechnung $\hat{\alpha} = \arcsin(\hat{X}(1)/g)$ geschätzt wird:

wobei *g* die mittlere Erdbeschleunigung ist.

7.  Verfahren nach Anspruch 6, wobei die Berechnung der Pseudoinverse durch eine rekursive Methode der kleinsten Quadrate ersetzt wird.

8.  Verfahren nach Anspruch 4, wobei aus den gefilterten Beschleunigungen $\gamma_{y,c,f}$ und $\gamma_{z,c,f}$ wie folgt eine korrigierte Beschleunigung ($\gamma_{y,c,cor}$) berechnet wird:

$$\gamma_{y,c,cor} \approx \gamma_{y,c,f} - \theta_{yz}\gamma_{z,c,f}$$

wobei $\theta_{yz}$ vorab gegeben ist oder geschätzt wird, und der Ablenkwinkel der Achse mittels folgender Rechnung geschätzt wird:

$$\hat{\alpha} = \arcsin(\gamma_{y,c,cor}/g)$$

wobei g die mittlere Erdbeschleunigung ist.

9.  Verfahren nach Anspruch 4, wobei zwei auf dem Rad (103) zueinander diametral entgegengesetzt angeordnete Beschleunigungsmesser (108, 109) verwendet werden, die jeweils Radialbeschleunigungen $\gamma_{z,c,1}$, und $\gamma_{z,c,2}$ messen, und wobei daraus die mittlere Radialbeschleunigung gebildet wird und als Radialbeschleunigung für die Schätzung des Ablenkwinkels der Achse herangezogen wird.

10. Luftfahrzeug umfassend zumindest ein Fahrwerk mit einem Rad, mit welchem zumindest ein Beschleunigungsmesser fest verbunden ist, der an einer elektronischen Steuereinheit einer Drucküberwachungsvorrichtung (107) zur Überwachung des Drucks eines Reifens (105) angeschlossen ist, die ein Computerprogramm ausführt, welches Befehle zur Umsetzung des Verfahrens nach einem der vorhergehenden Ansprüche enthält.

**Claims**

1.  A method of monitoring an aircraft landing gear (100) provided with a device (107) for monitoring the pressure of a tyre (105), the tyre (105) being carried by a wheel (103) of the landing gear, the wheel (103) being mounted to rotate on a landing gear axle (102), the method comprising the step of estimating an angle of deflection $\alpha$ of the axle at least when the wheel is in contact with the ground, **characterised in that** said estimation uses information from at least one accelerometer (108) integrated into the pressure monitoring device (107).

2.  The method according to Claim 1, wherein a transverse acceleration $\gamma_{y,c}$ measured by the accelerometer (108) in a direction substantially parallel to a central axis of the axle (102) and dependent on the angle of deflection $\alpha$ of the axle is used to estimate the latter.

3.  The method according to Claim 2, wherein an angle $\beta$ of rotation of the wheel (103) is estimated from an orthoradial acceleration $\gamma_{x,c}$ and/or a radial acceleration $\gamma_{z,c}$ measured by the accelerometer (108), and a speed of rotation $\omega = \dot{\beta}$ is then estimated, these two estimates being utilised to eliminate from the transverse acceleration $\gamma_{y,c}$ terms varying with the angle of rotation and the speed of rotation, and then the angle of deflection of the axle is estimated from the transverse acceleration $\gamma_{y,c}$ thus reprocessed.

4.  The method according to Claim 2, wherein the transverse acceleration $\gamma_{y,c}$ and a radial acceleration $\gamma_{z,c}$ measured by the accelerometer (108) are filtered to obtain a filtered transverse acceleration $\gamma_{y,c,f}$ and a filtered radial acceleration $\gamma_{z,c,f}$ by eliminating the terms varying periodically as a function of an angle of rotation $\beta$ of the wheel.

5.  The method according to Claim 4, wherein filtering is started from a landing onset that is detected when the quantity $|\gamma_{z,c}|$ exceeds a certain threshold or is in saturation.

6.  The method according to Claim 4, wherein, after the filtering has been established:

    - the data is collected

$$y_i = \gamma_{y,c,f}(t_i) \, h(t_i) = \begin{bmatrix} 1 & \gamma_{y,c,f}(t_i) \end{bmatrix}.$$

where the $t_i$ are the sampling instants, $\gamma_{y,c,f}$ is the filtered transverse acceleration, and $\gamma_{z,c,f}$ is the filtered radial acceleration;
- the sampled data are put into the following matrix form:

$$Y = \begin{bmatrix} y_1 \\ \dots \\ y_n \end{bmatrix} \qquad H = \begin{bmatrix} h_1 \\ \dots \\ h_n \end{bmatrix}$$

- a state vector $X$ is estimated by calculating $\hat{X} = M.Y$ with the pseudo-inverse $M = (H^t.H)^{-1}.H^t$ ;
- the angle of deflection of the axle is estimated by calculating $\hat{\alpha} = \arcsin(\hat{X}(1)/g)$ where $g$ is the acceleration of gravity.

7. The method according to Claim 6, wherein the pseudo-inverse calculation is replaced by a recursive least-squares method.

8. The method according to Claim 4, wherein a corrected acceleration ($\gamma_{y,c,cor}$) is calculated from the filtered accelerations $\gamma_{y,c,f}$ and $\gamma_{z,c,f}$ :

$$\gamma_{y,c,cor} \approx \gamma_{y,c,f} - \theta_{yz}\gamma_{z,c,f}$$

Where $\theta_{yz}$ is given or estimated beforehand, and the angle of deflection of the axle is estimated by the calculation

$$\hat{\alpha} = \arcsin(\gamma_{y,c,cor}/g)$$

where g is the acceleration of gravity.

9. The method according to Claim 4, wherein two accelerometers (108, 109) are used that are arranged on the wheel (103) diametrically opposite each other and measuring respective radial accelerations $\gamma_{z,c,1}$ and $\gamma_{z,c,2}$, and wherein the mean radial acceleration $\bar{\gamma}_{z,c} = \dfrac{\gamma_{z,c,1} + \gamma_{z,c,2}}{2}$ is formed and used as the radial acceleration for estimating the deflection angle of the axle.

10. An aircraft comprising at least one landing gear provided with a wheel to which is attached at least one accelerometer connected to an electronic control unit of a device (107) for monitoring the pressure of a tyre (105) performing a computer program comprising instructions arranged to implement the method according to any one of the preceding claims.

**Fig. 1**

**Fig. 2**

**Fig.3**

**Fig.4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3118030 A1
- EP 3336485 A1
- US 8543322 B1